# EUROPÄISCHE PATENTSCHRIFT

(11) **EP 4 476 100 B1**
(45) Veröffentlichungstag und Bekanntmachung des Hinweises auf die Patenterteilung: **08.10.2025**
(21) Anmeldenummer: 23703578.7
(22) Anmeldetag: 06.02.2023
(51) Int. Cl.: B60S 1/50, B60K 15/05

(54) **BERAUMUNG ZUR LEITUNG VON FLUIDEN**
SPATIAL ARRANGEMENT FOR THE DELIVERY OF FLUIDS
DISPOSITION SPATIALE POUR LA DISTRIBUTION DE FLUIDES

(30) Priorität: 10.02.2022 DE 102022103181; 01.02.2023 DE 102023102484
(43) Veröffentlichungstag der Anmeldung: 18.12.2024
(73) Patentinhaber: Motherson DRSC Deutschland GmbH, 96317 Kronach (DE)
(72) Erfinder: SUCK, Wolfgang, 96450 Coburg (DE); GRÜNBECK, Holger, 96264 Altenkunstadt (DE); FISCHER, Markus, 96215 Lichtenfels (DE)
(74) Vertreter: Isarpatent
(86) Internationale Anmeldenummer: PCT/EP2023/052871
(87) Internationale Veröffentlichungsnummer: WO 2023/152093

(56) Entgegenhaltungen:
- DE-A1- 102018 120 014
- DE-A1- 19 833 465
- DE-U1- 202014 005 799
- DE-U1- 202016 106 334

## Beschreibung

Die vorliegende Erfindung betrifft eine Beraumung zur Leitung von Fluiden in einen dafür vorgesehenen Fluidbehälter. Eine solche Beraumung ist für Fahrzeuge vorgesehen, in deren Karosserie sie integriert ist, sodass von außerhalb dem Fahrzeug Fluide zugeführt werden können.

### Hintergrund

Bei Fahrzeugen ist es bisher üblich, dass Fluide - wie bspw. Wischwasser - über entsprechende Einfüllstutzen im Motorraum zugeführt werden. Hierfür muss sich zunächst Zugang zum Motorraum verschafft werden, in dem eine Motorhaube geöffnet werden muss. Dies ist umständlich und erfordert einen gewissen Sachverstand, da im besten Fall nur Fachpersonal Zugang zum Motorraum eines Fahrzeuges haben sollte, um dort fachgerechte Wartungen oder Reparaturen durchzuführen. Auch ist die Art und Weise, wie Zugang zum Motorraum gewährt wird, von Modell zu Modell unterschiedlich und keinesfalls intuitiv gestaltet. So ist zum Beispiel die Motorhaube stets durch einen verborgenen Sicherheitshebel verriegelt, welcher beim Öffnen betätigt werden muss und von Modell zu Modell unterschiedlich ausgebildet sowie an unterschiedlichen Stellen angeordnet ist.

Des Weiteren birgt eine solche herkömmliche Art der Zuführung von Fluiden einerseits die Gefahr, dass diese beim Einfüllen verschüttet werden und so in den Motorraum gelangen und dort unter Umständen empfindliche Bauteile beschädigen können, und andererseits kann der Motorraum unmittelbar nach dem Fahren sehr heiß sein, was wiederum eine gewisse Verletzungsgefahr beim Einfüllen bedeutet, ganz zu schweigen von sich bewegenden Motorteilen, sofern der Motor sich noch im Betrieb befindet.

Um für das Zuführen von Fluiden nicht extra in den Motorraum gelangen zu müssen, können auch sog. Serviceklappen am Fahrzeug vorgesehen sein, die bei Bedarf einfach ausgeklappt werden können, damit das entsprechende Fluid eingefüllt werden kann. Nach dem Einfüllen kann die Serviceklappe wieder verschlossen werden. Vorbild hierfür ist das Tanken von flüssigem Kraftstoff, was seit vielen Jahren bereits ausschließlich über separate Tankklappen - oftmals hinten rechts und/oder links an einem Fahrzeug - erfolgt.

### Stand der Technik

DE 10 2018 120 014 A1 beschreibt ein Servicemodul für ein Kraftfahrzeug mit einer Tankmulde, die einen Aufnahmeraum umgrenzt und eine Flüssigkeitsdurchtrittsöffnung aufweist, die mit einem Flüssigkeitsvorratsbehälter verbindbar ist. In der Tankmulde ist eine Einfüllwanne mit einer Flüssigkeitsaustrittsöffnung vorgesehen, die um eine Drehachse gegenüber der Tankmulde schwenkbar angeordnet ist, wobei die Flüssigkeitsaustrittsöffnung und die Flüssigkeitsdurchtrittsöffnung unmittelbar benachbart zueinander angeordnet und durch die Drehachse durchsetzt sind. Nachteilig bei diesem Servicemodul ist, dass die Anordnung der Flüssigkeitsaustrittsöffnung und der Flüssigkeitsdurchtrittsöffnung zueinander kein dichter Abschluss gegenüber dem Kraftfahrzeug gewährt werden kann, da sich die beiden Öffnung gleichzeitig entsprechend der Drehachse zueinander drehen. Diese Stelle bildet jedoch wegen potenzieller Undichtigkeit eine Schwachstelle aus. Beim Einfüllen kann so Flüssigkeit an dieser Stelle austreten und in das Kraftfahrzeuginnere gelangen. Des Weiteren weist das beschrieben Servicemodul konstruktionsbedingt Toträume auf, in welchen eingefülltes Fluid zurückbleibt und nicht über die Flüssigkeitsaustrittsöffnung und die Flüssigkeitsdurchtrittsöffnung in den Flüssigkeitsvorratsbehälter gelangt.

DE 20 2016 106 334 U1 beschreibt ein Frontgrillemblem für ein Kraftfahrzeug, welches eine integrale Haubenentriegelung sowie einen Scheibenwaschflüssigkeitssammler umfasst. Das Frontgrillemblem ist hierbei zwischen einer Frontgrillemblemanzeigeposition, einer Haubenentriegelungsposition und einer Scheibenwaschflüssigkeitsfüllposition verstellbar. Der Scheibenflüssigkeitssammler weist in einer Seitenwand eine seitliche Öffnung auf, durch die in der Scheibenwaschflüssigkeitsfüllposition Scheibenwaschflüssigkeit in einen Schlauch gelangt und zu einem Scheibenwaschflüssigkeitsbehälter geführt wird. Nachteilig ist auch hier, dass zum einen durch die beschrieben konstruktive Ausgestaltung Toträume entstehen, in denen sich Scheibenwaschflüssigkeit ungenutzt sammelt und zum anderen die seitliche Öffnung und das Rohr nur in der Scheibenwaschflüssigkeitsfüllposition aufeinander liegen. Abseits dieser Position liegt die seitliche Öffnung frei, sodass überschüssige Scheibenwaschflüssigkeit unkontrolliert aus dem Scheibenwaschflüssigkeitsbehälter in das Innere des Kraftfahrzeugs gelangen kann. Außerdem kann durch die Verlagerung der seitlichen Öffnung in Bezug auf den Schlauch keine dichte Verbindung gewährleistet werden. Im ungünstigsten Fall tritt dort beim Einfüllen Scheibenwaschflüssigkeit unkontrolliert aus und gelangt so in den Motorraum, wo es Bauteile beschädigen kann. Auch verschmutzt ein unkontrolliertes Austreten von Scheibenwaschflüssigkeit die Umwelt.

### Aufgabe

Es ist daher Aufgabe der vorliegenden Erfindung, eine Beraumung zur Leitung von Fluiden in einen dafür vorgesehene Fluidbehälter bereitzustellen, welcher die Nachteile des Stands der Technik überwindet und zum einen Toträume vermeidet und zum anderen eine dauerhaft dichte Verbindung zwischen Beraumung und Fluidbehälter bereitstellt.

### Lösung

Die vorstehende Aufgabe wird durch eine Beraumung gemäß den Merkmalen nach Patentanspruch 1 gelöst. Vorteilhafte Ausgestaltungen der Erfindung sind anhand der abhängigen Patentansprüche und anhand der weiteren Beschreibung benannt und dargestellt.

Die vorliegende Erfindung ist eine Beraumung zur Leitung von Fluiden in einen dafür vorgesehenen Fluidbehälter, wobei die Beraumung in einer Karosserie eines Fahrzeugs integriert ist, wenigstens aufweisend ein Gehäuse mit einer unteren Aussparung, einer vorderen Aussparung und wenigstens einer seitlichen Aussparung sowie wenigstens einer seitlichen Lagerbuchse.

Darüber hinaus weist die Beraumung außerdem einen Einsatz auf, welcher wenigstens zum Teil in dem Gehäuse aufgenommen ist und eine obere Öffnung zum Einfüllen eines Fluids und eine untere Öffnung zum Auslassen des Fluids aufweist, wobei die obere Öffnung einen größeren Querschnitt als die untere Öffnung aufweist und an der unteren Öffnung zusätzlich eine sich nach unten erstreckende Schlauchhalterung angeordnet ist.

Die Beraumung weist weiterhin wenigstens einen Lagerzapfen auf, der seitlich am Einsatz angeordnet ist und sich nach außen hin erstreckt, wobei er in die wenigstens eine seitliche Lagerbuchse am Gehäuse eingreift, sodass sie eine gemeinsame Kippachse ausbilden, um die der Einsatz innerhalb des Gehäuses verschwenkbar ist und so von einer nicht gekippten Schließposition in eine gekippte Einfüllposition oder umgekehrt verbringbar ist.

Außerdem weist die Beraumung weiterhin wenigstens einen Führungszapfen auf, der sich seitlich vom Einsatz nach außen hin erstreckt und dabei in die wenigstens eine seitliche Aussparung am Gehäuse eingreift, sodass für den Einsatz sowohl eine Bewegungsführung als auch eine Bewegungsbegrenzung ausgebildet ist, durch welche die Schließposition und die Einfüllposition des Einsatzes definiert sind.
Weiterhin weist die Beraumung einen Fluidschlauch auf, welcher an die Schlauchhalterung an die untere Öffnung des Einsatzes anschließt und durch die untere Aussparung am Gehäuse aus dem Gehäuse herausgeführt ist.

Auch weist die Beraumung eine Blende auf, die mit wenigstens einer an der Blende angeordneten Rastnase an dem Einsatz angeordnet ist, wobei die wenigstens eine Rastnase in wenigstens eine entsprechende Rastaufnahme, welche an dem Einsatz angeordnet ist, eingreift, und wobei die Blende in der Schließposition die vordere Aussparung des Gehäuses verschließt und bündig mit der Karosserie des Fahrzeugs abschließt.

Weitere vorteilhafte Ausgestaltungen ergeben sich aus den Merkmalen gemäß den abhängigen Unteransprüchen.

Vorteilhafterweise ist bei dem Einsatz die sich nach unten erstreckende Schlauchhalterung als integraler Bestandteil ausgebildet. Das heißt, die Form der unteren Öffnung geht nahtlos in die Schlauchhalterung über. Hierdurch wird kein Spalt zwischen Einsatz und Schlauchhalterung ausgebildet, was den Vorteil hat, dass beim Einfüllen von Fluid nichts austreten kann.

Der Einsatz ist sozusagen als ein Gefäß ausgebildet, welches oben durch die obere Öffnung und unten durch die untere Öffnung beidseitig offen ausgebildet ist, sodass durch die obere Öffnung einfach und bequem Fluid eingefüllt werden kann, welches durch die untere Öffnung wieder ablaufen kann. Die untere Öffnung fungiert hierbei als Ablauf, sodass das eingefüllte Fluid durch diesen den Einsatz wieder verlässt und über die Schlauchhalterung in den daran angeordneten Fluidschlauch gelangt.

Der Fluidschlauch wiederum ist vorteilhafterweise mit einem Fluidtank verbunden. Das heißt, der Fluidschlauch bildet eine Verbindung zwischen dem Fluidtank und der Beraumung bzw. dem Einsatz der Beraumung aus. Beim Einfüllen kann so Fluid in den Fluidtank gelangen, ohne dass dieser direkt über bspw. den Motorraum befüllt werden muss. Ein solcher Fluidtank kann bspw. ein Tank für Wischwasser sein.

Vorteilhaft ist der Schlauch sowohl mit dem Fluidtank als auch mit dem Einsatz fluiddicht verbunden. Dies wird dadurch erreicht, dass Schlauch und Einsatz fest miteinander verbunden sind und nicht zueinander bewegbar sind. Eine solche Verbindung wird bspw. erreicht, in dem der Fluidschlauch auf die Schlauchhalterung - die als Schlauchtülle ausgebildet sein kann - aufgesteckt ist. Zusätzlich kann die Verbindung zwischen Fluidschlauch und Schlauchhalterung durch eine Schlauchschelle befestigt sein. Hierdurch wird ein sehr hohes Maß an Sicherheit hinsichtlich Fluiddichtigkeit erreicht.

In der Schließposition ist der Einsatz nicht geneigt und vollständig in dem Gehäuse aufgenommen. Nicht geneigt bedeutet hierbei eine im Wesentlichen vertikale Ausrichtung. Hierbei sind Abweichungen zur vertikalen Ausrichtung von maximal 10° zulässig. Kleinere Abweichungen als 10° gegenüber der vertikalen Ausrichtung sind hierbei ebenfalls durch den Ausdruck "im Wesentlichen" mit umfasst. In dieser Position schließt die Blende vorteilhafterweise bündig mit der Karosserie des Fahrzeugs ab. Die Beraumung ist so von außen, d.h**.** von außerhalb der Karosserie, nicht mehr erreichbar, wobei in dieser Position folglich auch kein Fluid mehr einfüllbar ist. Gleichzeitig fügt sich die Beraumung durch die Blende nahezu "nahtlos" in die Karosserie des Fahrzeugs ein, indem sie bündig mit der die Blende umliegenden Karosserie abschließt.

In der Einfüllposition ist der Einsatz innerhalb des Gehäuses um die Kippachse geneigt, sodass die obere Öffnung aus der Beraumung nach schräg oben herausragt. So kann bestimmungsgemäß Fluid über die obere Öffnung in die Beraumung bzw. in den Einsatz der Beraumung eingefüllt werden. Der Kipp- bzw. Neigungswinkel in der gekippten Einfüllposition beträgt maximal 90° gegenüber der Schließposition, vorteilhaft beträgt dieser bis zu 60°, vorteilhafter bis zu 45° und in einer besonders vorteilhaften Ausgestaltung 30° gegenüber der nicht gekippten Schließposition, wobei Abweichungen von wenigen Winkelgrad - sofern sie im Bereich technisch üblicher Toleranzen liegen - mit umfasst sind. Abweichungen von mehr als 5° sollten hierbei nicht überschritten werden.

Die gekippte Einfüllposition sowie die nicht gekippte Schließposition wird von der wenigstens einen seitlichen Aussparung und dem darin eingreifenden wenigstens einen Führungszapfen vorgegeben. Beim Kippen des Einsatzes gleitet der wenigstens eine Führungszapfen innerhalb der wenigstens einen Aussparung entlang. Die wenigstens eine seitliche Aussparung gibt hierbei einen Führungspfad für den wenigstens einen Führungszapfen vor. Hierbei bildet die wenigstens eine seitliche Aussparung an einem Ende des Führungspfads gleichzeitig einen Anschlag aus. Beim Erreichen der gekippten Einfüllposition stößt der wenigstens eine Führungszapfen an diesen Anschlag an, sodass eine weitere Bewegung des Einsatzes um die gemeinsame Kippachse gestoppt wird. Der Einsatz wird so gleichzeitig in der gekippten Einfüllposition in dem Gehäuse der Beraumung gehalten und kann nicht nach vorn herausfallen. Die Führung über den wenigstens einen Führungszapfen ermöglicht hierbei außerdem eine stabile Lagerung des Einsatzes. In einer alternativen Ausführungsform können zwei Führungszapfen vorgesehen sein, die sich gegenüberliegen und entsprechend in zwei seitliche Aussparungen eingreifen, die sich ebenfalls am Gehäuse gegenüberliegen. Hierdurch wird eine besonders stabile Lagerung des Einsatzes innerhalb des Gehäuses gewährleistet.

Es ist ebenfalls denkbar, dass bei der wenigstens einen seitlichen Aussparung ein weiterer Anschlag zur Begrenzung der Bewegung des Einsatzes in der Schließposition vorgesehen ist. So kann der Einsatz beim Erreichen der Schließposition nicht weiter in das Gehäuse hineingedrückt werden, sodass die Blende exakt mit der Karosserie abschließt. Einer etwaigen Beschädigung der Beraumung durch unsachgemäßes tiefes Hineindrücken des Einsatzes in das Gehäuse nach einem Einfüllvorgang kann so effektiv vorgebeugt werden.

In jeder Position ist der Fluidschlauch derart an die Schlauchhalterung angeschlossen, dass dieser immer nach unten durch die untere Aussparung herausgeführt ist. Hierdurch wird zu jedem Zeitpunkt gewährleistet, dass Fluid durch den Fluidschlauch nach unten ablaufen kann - unabhängig von der Position des Einsatzes, d.h**.** gekippt oder nicht gekippt. Dies ist zum Beispiel relevant, wenn sich nach dem Einfüllvorgang noch Fluid innerhalb des Einsatzes befindet, dieser sich aber schon wieder in der Schließposition befindet. Die Verbindung zwischen Fluidtank und Beraumung über den Fluidschlauch bleibt so in jeder Position bestehen, sodass Reste von eingefüllten Fluid unabhängig von der Position weiterhin aus dem Einsatz heraus in den Fluidtank ablaufen können.

In einer alternativen Ausführungsform kann an der Schlauchhalterung weiterhin ein Ablaufventil vorgesehen sein, welches dazu ausgebildet ist, eingefülltes Fluid nur in eine Richtung - und zwar in Ablaufrichtung - durchzulassen. So kann eingefülltes Fluid durch das Ablaufventil und den Fluidschlauch nur in Richtung des Fluidtanks fließen, ein Zurückfließen würde vom Ablaufventil verhindert werden. Alternativ ist ebenfalls denkbar, dass das Ablaufventil derart ausgebildet ist, dass es in der Einfüllposition geöffnet und in der Schließposition geschlossen ist. So kann bspw. während der Fahrt eingefülltes Fluid vom Fluidtank über den Fluidschlauch nicht wieder in den Einsatz hineinschwappen bzw. -fließen, was durch Bewegung des Fluids passieren könnte.

Die wenigstens eine Rastnase und wenigstens eine Rastaufnahme zwischen Einsatz und Blende sind vorteilhaft als Klickverbindung ausgebildet, sodass bspw. Blenden unterschiedlicher Form und/oder Farbe schnell und einfach an dem Einsatz angebracht werden können. Dadurch ist es möglich, die hier beschriebene Beraumung für verschiedenste Modelle von Fahrzeugen schnell und einfach bereitzustellen, indem die jeweils gewünschte Blende schnell und einfach mit dem Einsatz verbindbar ist.

In einer vorteilhaften Ausgestaltung der Beraumung gemäß den Merkmalen nach Patentanspruch 2 ist gewählt, dass der Einsatz einteilig ausgebildet ist. Das Material des Einsatzes ist hierbei Kunststoff, Metall, Verbundmaterial oder eine Kombination hieraus. Als Verbundmaterial können bspw. glasfaser- oder carbonfaserverstärkte Kunststoffe zum Einsatz kommen.

Der Einsatz ist vorteilhaft als ein einteiliges Spritzgussteil ausgebildet, was die wenigstens eine Rastaufnahme, den wenigstens einen Lagerzapfen, den wenigstens einen Führungszapfen und den Schlauchansatz an der unteren Öffnung mit umfasst. Im Falle von Kunststoff als Material ist der Einsatz als ein Kunststoffspritzgussteil ausgebildet. So ist der Einsatz schnell, kostengünstig, in hoher Stückzahl und stabil herstellbar.

Ebenso ist denkbar, dass auch die übrigen Komponenten der Beraumung - wie das Gehäuse und die Blende nebst der wenigstens einen Rastnase - ebenfalls als Spritzgussteil, bevorzugt als Kunststoffspritzgussteil, ausgebildet sind.

In einer vorteilhaften Ausgestaltung der Beraumung gemäß den Merkmalen nach Patentanspruch 3 ist gewählt, dass die untere Öffnung am tiefsten Punkt des Einsatzes angeordnet ist. Hierdurch wird ein Ablaufen von Fluid in jedem Fall sicher gewährleistet. Es findet hierdurch auch ein schneller und direkter Fluiddurchlauf beim Einfüllen statt, sodass die Beraumung vorteilhaft entsprechend kompakt ausgebildet werden kann. Ein weiterer Vorteil ist, dass durch das schnelle Abfließen von eingefülltem Fluid, was durch die Anordnung der unteren Öffnung am tiefsten Punkt des Einsatzes gewährleistet ist, zum einen eine schnelles Einfüllen möglich ist, was unnötige Wartezeiten erspart, und zum anderen kein Überlaufen möglich ist, weil zum Beispiel viel Fluid in sehr kurzer Zeit eingefüllt wurde, was aber wiederum vom Einsatz schnell aufgenommen und in den Fluidtank weitergeleitet wird.

In einer vorteilhaften Ausgestaltung der Beraumung gemäß den Merkmalen nach Patentanspruch 4 ist gewählt, dass die untere Öffnung als eine pyramidal oder konisch geformte Ablauföffnung ausgebildet ist. Hierbei weist der Einsatz im unteren Bereich, d.h. im Bereich der unteren Öffnung, eine runde oder eckige Trichterform auf.

Im Fall der pyramidal geformten Ablauföffnung sind die Flächen im unteren Bereich des Einsatzes, die unmittelbar an die untere Öffnung angrenzen, zu dieser nach unten hin geneigt und gleichzeitig zu dieser hin verjüngt ausgebildet, sodass Fluide stets zur unteren Öffnung hin geleitet werden und dort abfließen können. Die Flächen müssen hierbei nicht unbedingt flach ausgebildet sein. Sie können ebenso in einer alternativen Ausgestaltung gewölbt ausgebildet sein. In jedem Fall sind sie derart ausgebildet, dass sie das Fluid zur unteren Öffnung hin leiten.

Im Falle der konisch geformten Ablauföffnung weist die Fläche im unteren Bereich des Einsatzes, die unmittelbar an die untere Öffnung angrenzt, eine sich nach unten hin verjüngende Kegelform auf. So leitet sie eingefülltes Fluid stets in Richtung der unteren Öffnung. Die Kegelform muss hierbei nicht unbedingt einer streng mathematisch definierten Kegelform entsprechen. Sie kann ebenso in einer alternativen Ausgestaltung zusätzlich konkav oder konvex gewölbt ausgebildet sein.

Es sind durch die im unteren Bereich des Einsatzes pyramidal oder konisch geformten Flächen zur unteren Öffnung hin vorteilhaft keine waagerechten Flächen oder Ecken vorhanden, die sogenannte Toträume ausbilden könnten, in denen eingefülltes Fluid nach dem Einfüllen als Rest verbleibt und nachteiligerweise nicht ablaufen kann und so im Einsatz zurückbleiben würde. Der vollständige Ablauf des eingefüllten Fluids aus dem Einsatz wieder heraus in den Fluidschlauch und anschließend in den Fluidtank ist hierdurch stets in jeder Position des Einsatzes gewährleistet. Fluidreste können durch diese konstruktive Ausgestaltung des unteren Bereichs des Einsatzes vorteilhafterweise nicht im Einsatz zurückbleiben.

Des Weiteren wird durch diese konstruktive Ausgestaltung ein Ablaufen von Fluid in jedem Fall sicher gewährleistet. Es findet hierdurch auch ein schneller und direkter Fluiddurchlauf beim Einfüllen statt, sodass die Beraumung vorteilhaft entsprechend kompakt ausgebildet werden kann. Das eingefüllte Fluid gelangt ohne große Umwege direkt in den Fluidschlauch und kann rasch ablaufen. Ein weiterer Vorteil ist, dass durch das schnelle Abfließen von eingefüllten Fluid, was durch diese konstruktive Ausgestaltung des Einsatzes gewährleistet ist, zum einen eine schnelles Einfüllen von Fluid möglich ist, was unnötige Wartezeiten erspart, und zum anderen ein Überlaufen verhindert, weil zum Beispiel viel Fluid in sehr kurzer Zeit eingefüllt wird, was aber wiederum vom Einsatz schnell aufgenommen und rasch in den Fluidtank weitergeleitet wird.

In einer vorteilhaften Ausgestaltung der Beraumung gemäß den Merkmalen nach Patentanspruch 5 ist gewählt, dass die untere Öffnung mit der sich nach unten erstreckenden Schlauchhalterung mit dem daran angeschlossenen Fluidschlauch versetzt zur Kippachse angeordnet ist. Hierbei ist die Schlauchhalterung in Richtung der vorderen Aussparung des Gehäuses hin versetzt angeordnet. Dadurch bildet die untere Öffnung in der gekippten Einfüllposition gleichzeitig eine Ablauföffnung am tiefsten Punkt des Einsatzes aus. Der Einsatz selbst funktioniert in dieser Position sodann wie ein Trichter, wodurch sämtliches eingefülltes Fluid in Richtung der unteren Öffnung geleitet wird. Fluidreste können so nicht im Einsatz verbleiben und laufen durch die zur Kippachse versetzten Position vollständig ab. Es verbleibt vorteilhaft kein Fluid nach dem Einfüllen im Einsatz.

In einer vorteilhaften Ausgestaltung der Beraumung gemäß den Merkmalen nach Patentanspruch 6 ist gewählt, dass die Schlauchhalterung als eine Schlauchtülle ausgebildet ist, auf die der Fluidschlauch aufsteckbar ist. Hierdurch ist eine besonders einfache, aber auch sichere Anbringung des Fluidschlauchs an den Einsatz möglich. Der Fluidschlauch und die Schlauchtülle bilden durch das Aufstecken eine dichte Verbindung aus. Dadurch wird ein Austreten von eingefüllten Fluid effektiv verhindert. Zur sichereren Halterung des Schlauchs ist ebenfalls denkbar, dass die Schlauchtülle am Außenumfang umlaufende Vorsprünge aufweist, die die Wirkung von Widerhaken entfalten und so ein Abreißen des Fluidschlauchs verhindern. Zusätzlich oder alternativ ist denkbar, dass der Fluidschlauch mit einer Schlauchschelle am Schlauchstutzen gesichert ist. Hierdurch kann ein unbeabsichtigtes Austreten von Fluid in jedem Fall verhindert werden.

Die Möglichkeit, den Fluidschlauch einfach auf die Schlauchtülle aufstecken zu können, macht darüber hinaus eine Montage der Beraumung einfach und unkompliziert.

In einer vorteilhaften Ausgestaltung der Beraumung gemäß den Merkmalen nach Patentanspruch 7 ist gewählt, dass die wenigstens eine seitliche Aussparung am Gehäuse als Kreisbogen mit Mittelpunkt in der Kippachse ausgebildet ist. Hierdurch ist die Kippbewegung des Einsatzes, dessen wenigstens einer Führungszapfen in die wenigstens eine seitliche Aussparung eingreift und von diesem geführt wird, begrenzt, womit wenigstens die gekippte Einfüllposition vorgegeben ist. Mit Erreichen der gekippten Einfüllposition schlägt der wenigstens eine Führungszapfen an das jeweilige Ende der seitlichen Aussparung an, die in Richtung der vorderen Aussparung des Gehäuses angeordnet ist. Durch diesen Anschlag kann der Einsatz in der gekippten Einfüllposition nicht nach vorn aus dem Gehäuse zu weit herauskippen.

Es ist ebenfalls denkbar, dass das Ende der wenigstens einen seitlichen Aussparung am Gehäuse, welches in entgegengesetzter Richtung zur vorderen Aussparung am Gehäuse angeordnet ist, die nicht gekippte Schließposition vorgibt, in dem der wenigstens eine Führungszapfen mit Erreichen dieser Position an dieses Ende anstößt. Durch diesen Anschlag kann der Einsatz in der nicht gekippten Schließposition nicht weiter in das Gehäuse hineingedrückt werden. Dadurch wird vorteilhaft ein optimaler bündiger Abschluss der Blende mit der Karosserie in der Schließposition gewährleistet.

In einer vorteilhaften Ausgestaltung der Beraumung gemäß den Merkmalen nach Patentanspruch 8 ist gewählt, dass das Gehäuse zusätzlich eine oder mehrere Halterungen für ein oder mehrere Anbauteile aufweist. Hierdurch lassen sich funktionale Anbauteile in die Beraumung integrieren, die bspw. das Einfüllen von Fluid erleichtern sollen. Die Halterung bzw. die Halterungen können hierbei als Rastvorsprünge, Rastaufnahmen oder Vorsprünge zur Befestigung mit Schrauben, Klemmen, Nieten und/oder Klebstoff ausgebildet sein.

Als Anbauteile kommen Aktoren wie bspw. Zentralverriegelungsversteller (ZV-Versteller), Elektro-Stellmotoren, Schrittmotoren oder Verschließzylinder in Betracht. Denkbar sind ebenfalls Anbauteile in Form von Sensoren, wie zum Beispiel Füllstandssensoren, oder Signalgeber, die optische und/oder akustische Signale abgegeben können. So kann bspw. beim Einfüllen signalisiert werden, wann der maximale Füllstand erreicht ist und mit dem Einfüllen aufgehört werden soll. Es ist ebenfalls auch denkbar, dass als Anbauteil bzw. als Anbauteile Leuchtelemente, wie bspw. eine oder mehrere LEDs, vorgesehen sind. Mit diesen ist eine Ausleuchtung des Einfüllbereichs, das heißt der Bereich der oberen Öffnung des Einsatzes, möglich, womit ein Einfüllen auch bei schlechten Lichtbedingungen gut und sicher durchführbar ist.

In einer vorteilhaften Ausgestaltung der Beraumung gemäß den Merkmalen nach Patentanspruch 9 ist gewählt, dass das Anbauteil ein Verschließzylinder ist, welcher gegenüberliegend von der vorderen Aussparung des Gehäuses angeordnet ist. Vereinfacht gesagt ist der Verschließzylinder an der Rückwand des Gehäuses angeordnet, wobei die Rückwand die Wand des Gehäuses ist, welche der vorderen Aussparung gegenüberliegt. Der Verschließzylinder dient zum Öffnen und Schließen der Beraumung. Dieser kann hierbei einen Push-Push-Mechanismus bzw. einen Pusch-top-open-Mechanismus aufweisen. Durch Druck auf die Blende wird der Einsatz leicht nach hinten in die Karosserie hineingedrückt, wobei der Einsatz gegen den Verschließzylinder drückt, woraufhin dieser den Einsatz freigibt und wiederum nach vorn heraus in die gekippte Einfüllposition drückt. Nach erfolgter Fluidzufuhr kann der Einsatz durch Druck auf die Blende wieder leicht in die Karosserie hinein gedrückt werden, wobei der Einsatz abermals gegen den Verschließzylinder drückt, woraufhin dieser diesmal den Einsatz verriegelt und gleichzeitig in der nicht gekippten Schließposition hält. Der Vorgang ist beliebig oft wiederholbar.

In einer vorteilhaften Ausgestaltung der Beraumung gemäß den Merkmalen nach Patentanspruch 10 ist gewählt, dass an dem Gehäuse auf wenigstens einer Seite wenigstens ein Federelement angeordnet ist, welches eine Wirkverbindung mit dem wenigstens einen Lagerzapfen aufweist und koaxial zur Kippachse angeordnet ist. Das wenigstens eine Federelement ist im einfachsten Fall als eine Spiralfeder ausgebildet. Sie bewirkt ein Drehmoment auf den wenigstens einen in Wirkverbindung stehenden Lagerzapfen, womit der Einsatz, welcher ebenfalls in Wirkverbindung zum wenigstens einen Lagerzapfen steht, um die gemeinsame Kippachse herum in eine bestimmte Position verbracht werden kann. Vorteilhaft bewirkt das wenigstens eine Federelement eine Rückstellkraft in Richtung der Einfüllposition, sodass mit Freigabe des Einsatzes dieser automatisch durch die Federkraft des wenigstens einen Federelements in die Einfüllposition verschwenkt bzw. gekippt wird. Wird der Einsatz zurück in die Schließposition verschwenkt, so muss von außen auf den Einsatz gedrückt werden und die Rückstellkraft des wenigstens einen Federelements überwunden werden. Mit Erreichen der Schließposition ist das wenigstens Federelement wieder vorgespannt. Vorteilhaft wird der Einsatz in dieser Position bis zur nächsten Freigabe selbsttätig gehalten.

In einer vorteilhaften Ausgestaltung der Beraumung gemäß den Merkmalen nach Patentanspruch 11 ist gewählt, dass an dem Gehäuse wenigstens ein Dämpfungselement angeordnet ist, welches eine Wirkverbindung mit dem wenigstens einen Lagerzapfen aufweist und koaxial oder parallel zur Kippachse angeordnet ist. Die Wirkverbindung wird hierbei vorteilhaft durch ein Zahnrad oder zumindest durch ein Zahnradsegment hergestellt, wobei sich das Zahnrad bzw. Zahnradsegment sich mit dem wenigstens einen Lagerzapfen drehen kann und so die Drehbewegung auf das wenigstens eine Dämpfungselement überträgt. Dies hat den Vorteil, dass der Einsatz nicht ohne Weiteres in die Einfüllposition verschwenken bzw. kippen kann, sondern hierbei eine Dämpfung erfährt. Dadurch gleitet der Einsatz sanft in die Einfüllposition. Umgekehrt entfaltet das wenigstens eine Dämpfungselement eine Dämpfungswirkung in entgegengesetzter Richtung, wenn der Einsatz wieder in die Schließposition verbracht wird. Die Dämpfung der Bewegung des Einsatzes von der Schließposition in die Einfüllposition oder umgekehrt hat den Vorteil, dass durch die langsamere Bewegung die Komponenten der Beraumung geschont werden und keine Beschädigung durch unkontrollierte und schnelle Bewegung des Einsatzes innerhalb des Gehäuses erfahren.

Es können als Anbauteile in einer weiteren vorteilhaften Ausgestaltung sowohl wenigstens ein Federelement als auch wenigstens ein Dämpfungselement vorgesehen sein. Hierdurch wird ein Feder-Dämpfer-Mechanismus ausgebildet, welcher zum einen eine Rückstellkraft bewirkt und andererseits die Federwirkung dämpft, sodass ein sanfter Bewegungsablauf des Einsatzes beim Wechsel aus der Schließposition in die Einfüllposition und umgekehrt gewährleistet wird.

In einer vorteilhaften Ausgestaltung der Beraumung gemäß den Merkmalen nach Patentanspruch 12 ist gewählt, dass das Gehäuse wenigstens ein Halteelement zur Halterung der Beraumung an der Karosserie aufweist. Solch ein Halteelement ist vorteilhaft als Vorsprung in Form einer Haltenase ausgebildet, die an die Innenseite der Karosserie drückt. Gleichzeitig umgreift ein Teil des Gehäuses den inneren Rand der Aussparung in der Karosserie, in welcher die Beraumung angeordnet ist und durch welche der Einsatz der Beraumung von außerhalb der Karosserie zugänglich ist. Zur besseren Halterung der Beraumung an der Karosserie können auch mehrere Halterungen vorgesehen sein.

In einer vorteilhaften Ausgestaltung der Beraumung gemäß den Merkmalen nach Patentanspruch 13 ist gewählt, dass das Gehäuse wenigstens einen akustischen und/oder optischen Signalgeber aufweist. Ein solcher Signalgeber ist in der Lage der Person, welche ein Fluid einfüllt, optisch und/oder akustisch Rückmeldung über den Füllstand des Fluids im Fluidtank zu geben. So kann im Falle eines optischen Signalgebers ein Lichtelement durch Blinken und/oder durch eine bestimmte Farbe anzeigen, ob bspw. der maximale Füllstand erreicht worden ist und das Einfüllen von Fluid beendet werden soll. So ist denkbar, dass Rot für einen niedrigen Füllstand, gelb für halb voll und grün für voll steht. Ebenso ist es denkbar, durch Blinken des optischen Signalgebers den Füllstand wiederzugeben. So kann bspw. ein langsames Blinken einen niedrigen Füllstand und ein schnelles Blinken einen hohen Füllstand im Fluidtank anzeigen. Das Tempo des Blinkers kann hierbei für den Füllstand stehen. Auch können bspw. mehrere nebeneinander angeordnete Lichtelemente eine optische Füllstandsanzeige ausbilden, wobei je nach Füllstand unterschiedlich viele Lichtelemente Licht emittieren.

Im Falle eines akustischen Signalgebers ist es denkbar, dass ein Piepen Rückmeldung über den Füllstand im Fluidtank gibt. So kann ein Piepton anzeigen, dass beim Einfüllen der maximale Füllstand erreicht worden ist und das Einfüllen beendet werden sollte. Auch könnte ein Piepen mit unterschiedlichem Tempo abhängig vom aktuellen Füllstand im Fluidtank erfolgen. Ebenso könnte auch die Tonhöhe des akustischen Signalgebers abhängig vom Füllstand variiert werden.

In jedem Fall sind hierfür im Fluidtank ein oder mehrere Füllstandssensoren angeordnet, die den Füllstand an die akustischen und/oder optischen Signalgeber weitergeben.

In einer vorteilhaften Ausgestaltung der Beraumung gemäß den Merkmalen nach Patentanspruch 14 ist gewählt, dass das Gehäuse wenigstens ein Lichtelement zur Beleuchtung des Einsatzes aufweist. Hierdurch ist vorteilhaft ein Einfüllen von Fluid auch bei schlechten Lichtbedingungen einfach und sicher möglich. Gleichzeitig wird eine Person, die Fluid einfüllen möchte, durch das Licht des Lichtelements zur Beraumung geführt, da die Beleuchtung von außerhalb der Karosserie sichtbar ist. So wird eine einfache und intuitive Bedienung der Beraumung bereitgestellt.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: Perspektivische Ansicht einer Beraumung in einer Schließposition von schräg oben
- Fig. 2: Perspektivische Ansicht einer Beraumung in einer Einfüllposition von schräg hinten
- Fig. 3: Perspektivische Ansicht einer Beraumung in einer Einfüllposition von schräg vorn
- Fig. 4: Perspektivische Ansicht einer Beraumung in einer Einfüllposition von schräg oben
- Fig. 5: Beraumung ohne Blende
- Fig. 6: Blende mit Rastnasen
- Fig. 7: Einsatz
- Fig. 8: Teilansicht eines Einsatzes mit daran angeordneten Fluidschlauch
- Fig. 9: Gehäuse
- Fig. 10: Einsatz
- Fig. 11: Perspektivische Ansicht eines Einsatzes einer Beraumung von hinten und schräg oben
- Fig. 12: Teilausschnitt einer Karosserie
- Fig. 13: Teilansicht der Beraumung mit Feder-Dämpfer-Mechanismus
- Fig. 14: Lagerzapfen mit Zahnkranz
- Fig. 15: Teilansicht der Beraumung ohne Dämpfungselement und mit Federelement
- Fig. 16: Lagerzapfen ohne Zahnkranz
- Fig. 17a: Eine erste Ausführungsform eines Anbauteils
- Fig. 17b: Eine zweite Ausführungsform eines Anbauteils
- Fig. 17c: Eine dritte Ausführungsform eines Anbauteils

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

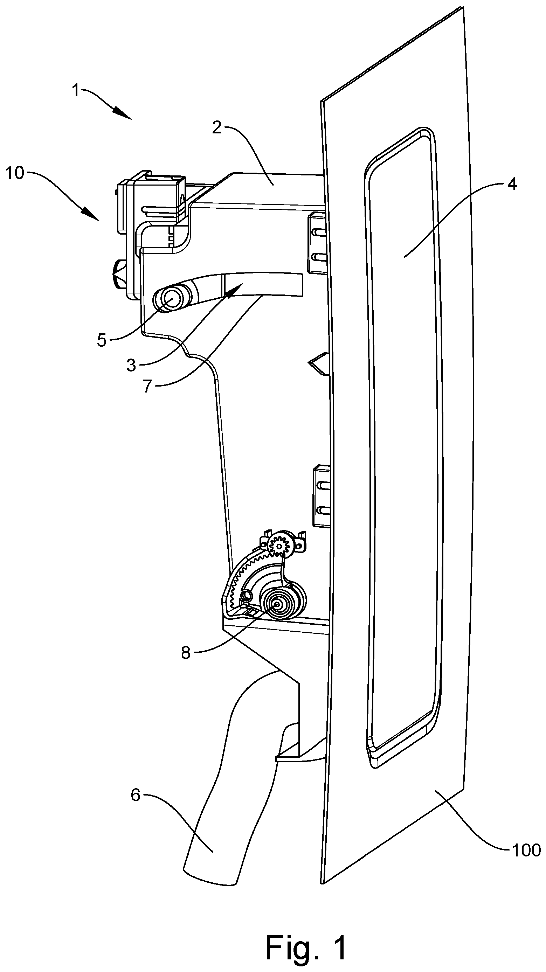

Fig. 1 zeigt eine perspektivische Ansicht einer Beraumung 1 in einer Schließposition von schräg oben, wobei die Front der Beraumung vom Betrachter aus rechts ist. Diese wird von einer Karosserie 100 - hier als ein Ausschnitt gezeigt - eines Fahrzeugs und darin mittig und bündig angeordnet von einer Blende 4 ausgebildet. In der gezeigten Ausführungsform weist die Blende 4 eine rechteckige Form mit abgerundeten Ecken und hochkanter Ausrichtung auf. Die Blende ist an einem Einsatz 3 befestigt, welcher wiederum in einem Gehäuse 2 schwenkbeweglich aufgenommen ist. Die Schwenkbewegung ist hierbei durch eine schwenkbewegliche Lagerung des Einsatzes 3 am Gehäuse 2 bewirkbar. Hierfür sind im unteren Bereich des Gehäuses 2 zwei seitliche Lagerbuchsen 8 vorgesehen, die gegenüberliegend angeordnet sind und in die jeweils ein Lagerzapfen 9 (hier nicht gezeigt) eingeschoben ist, wobei die Lagerzapfen 9 wiederum mit dem Einsatz 3 verbunden sind.

Im oberen Bereich des Gehäuses 2 sind zwei seitliche Aussparungen 7 in Form von Führungsschlitzen vorgesehen, die gegenüberliegend angeordnet sind, wobei einer der beiden seitlichen Aussparungen 7 auf der vom Betrachter abgewandten Seite angeordnet ist und dadurch in der gezeigten Fig. 1 nicht zu sehen ist. In die seitlichen Aussparungen 7 greift jeweils ein Führungszapfen 5 ein, die mit dem Einsatz 3 verbunden sind. Die Führungszapfen 5 werden durch die seitlichen Aussparungen 7 geführt. Hierdurch kann der Einsatz 3 in seiner Kipp- bzw. Schwenkbewegung sicher geführt werden und von einer Schließposition, wie hier in Fig. 1 gezeigt, in eine Einfüllposition verbracht werden.

Unterhalb des Einsatzes 3 ist ein Fluidschlauch 6 angeordnet, der nach unten hin aus dem Gehäuse 2 herausgeführt ist und die Verbindung zu einem Fluidtank herstellt, welcher hier nicht gezeigt ist.

Auf der Rückseite des Gehäuses 2, der Blende 4 gegenüberliegend, ist im oberen Bereich ein Anbauteil 10 angeordnet. Das Anbauteil 10 kann verschiedene Funktionen aufweisen. So ist denkbar, dass hierdurch eine Ver- oder Entriegelung des Einsatzes 3 bewirkbar ist, sodass die Beraumung 1 über eine externe Steuerung auf Befehl eines Benutzers hin je nach Wunsch ver- oder entriegelt wird. Der Einsatz 3 kann bspw. so in der Schließposition verriegelt werden, sodass dieser von außerhalb der Karosserie 100 nicht geöffnet werden kann.

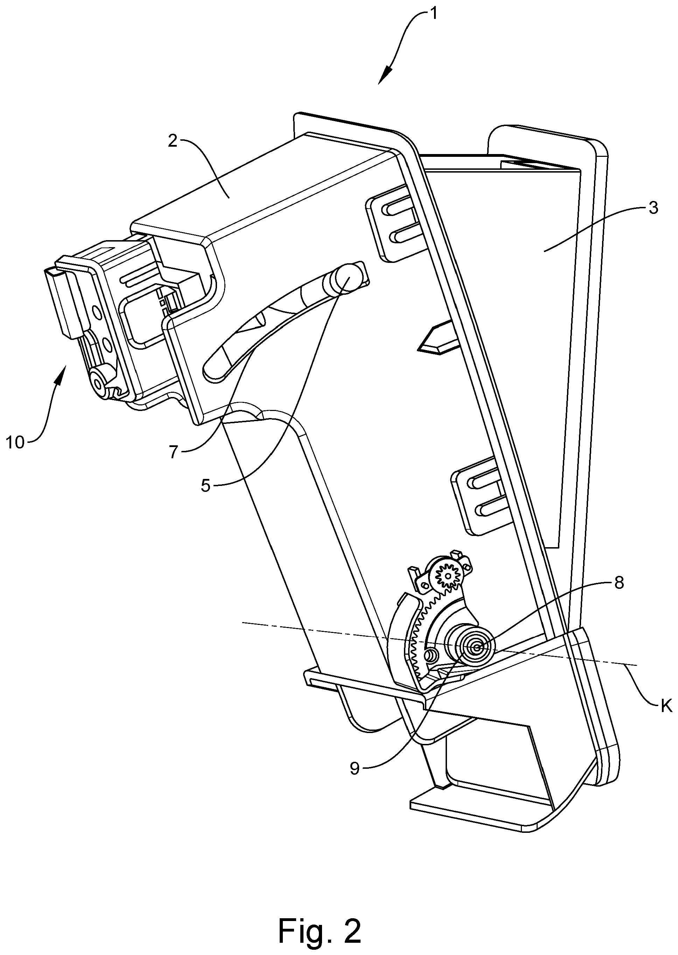

Fig. 2 zeigt eine perspektivische Ansicht einer Beraumung 1 in einer Einfüllposition von schräg hinten. Fig. 2 zeigt die Beraumung 1, wie sie bereits in Fig. 1 gezeigt ist, jedoch in einer anderen Position und ohne Fluidschlauch 6, Karosserie 100 und Blende 4. In der gezeigten Einfüllposition ist der Einsatz 3 um eine Kippachse K gekippt bzw. verschwenkt, wobei der Einsatz 3 aus dem Gehäuse 2 zu einem Teil herausragt. Die Kippachse K verläuft durch die beiden seitlichen Lagerbuchsen 8 und die darin aufgenommenen Lagerzapfen 9.

In der gekippten Stellung des Einsatzes 3 der Einfüllposition liegt der obere Bereich des Einsatzes 3 frei. Dieser ist nach oben hin offen ausgebildet, sodass ein Fluid von oben in den Einsatz eingefüllt werden kann. Die Einfüllposition des Einsatzes 3 wird durch ein Anschlagen der Führungszapfen 5 an die vorderen Enden der seitlichen Aussparungen 7 begrenzt. Ein weiteres Verschwenken des Einsatzes 3 um die Kippachse K herum aus dem Gehäuse 2 heraus ist somit nicht möglich.

Im oberen Bereich ist hinten am Gehäuse 2 ein Anbauteil 10 angeordnet. Ein solches Anbauteil 10 kann - wie schon bei Fig. 1 beschrieben - eine Ver- oder Entriegelung des Einsatzes 3 bewirken. Hierfür kann das Anbauteil 10 als Push-Push-Mechanismus, Push-to-open-Mechanismus, 2-poliger oder 4-poliger ZV-Steller mit einem E-Stellmotor ausgebildet sein.

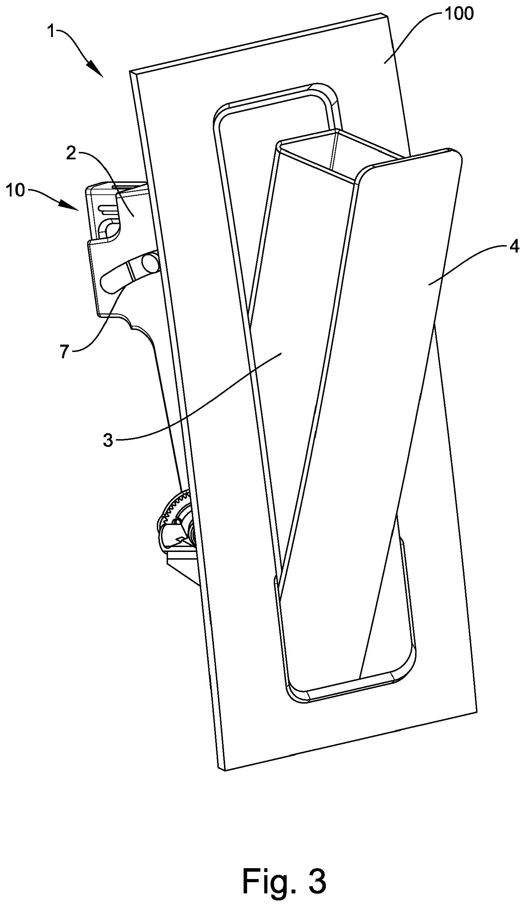

Fig. 3 zeigt eine perspektivische Ansicht einer Beraumung 1 in einer Einfüllposition von schräg vorn. Sie zeigt im Wesentlichen die Beraumung 1, wie sie bereits in Fig. 1 gezeigt ist, jedoch in einer anderen Position und ohne Fluidschlauch 6. Der Einsatz 3 ist nach vorn aus dem Gehäuse 2 herausgekippt bzw. -verschwenkt, sodass der Einsatz 3 nach oben hin offen ist und so ein Fluid von oben eingefüllt werden kann. Die Blende 4, welche vorn an dem Einsatz 3 angebracht ist, ist in der Einfüllposition nicht mehr bündig zur Karosserie 100 angeordnet, sondern gleichermaßen gekippt hierzu. Der untere Teil des Einsatzes 3 und der Blende 4 sind in dieser Position zum Teil nach innen in das Gehäuse 2 hineinverlagert. Dies folgt entsprechend der Schwenkbewegung um die Kippachse K, die hier nicht gezeigt ist.

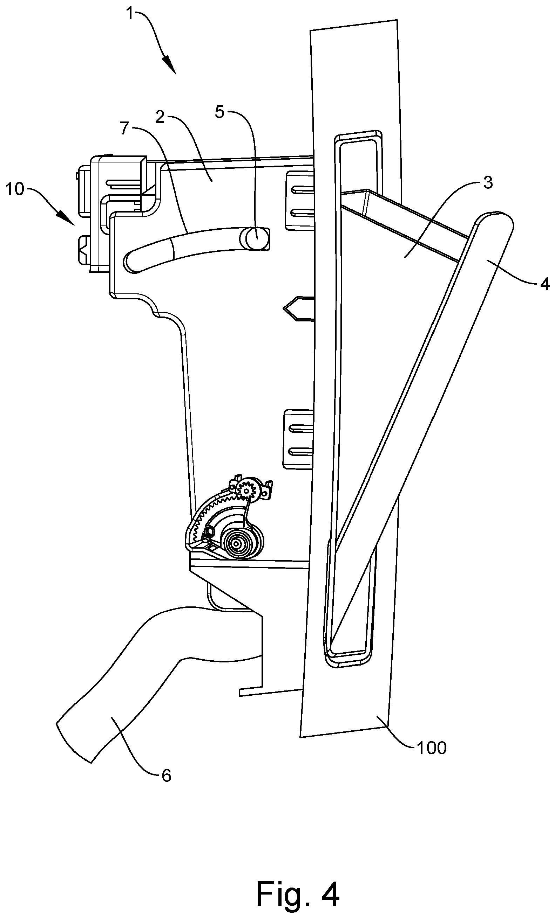

Fig. 4 zeigt eine perspektivische Ansicht einer Beraumung 1 in einer Einfüllposition von schräg oben. Die Beraumung 1 entspricht hierbei der Beraumung 1, wie sie bereits in Fig. 1 gezeigt ist, jedoch in einer anderen Position. Der Einsatz 3 ist nach vorn aus dem Gehäuse herausgekippt bzw. -verschwenkt und dadurch nach oben hin offen, sodass ein Fluid von oben in den Einsatz 3 hineingefüllt werden kann. Das Fluid kann durch den Einsatz 3 nach unten fließen und in den Fluidschlauch 6, der unterhalb des Einsatzes 3 angeordnet ist und nach unten aus dem Gehäuse 2 herausgeführt ist, gelangen. Über den Fluidschlauch 6 kann das eingefüllte Fluid in einen Fluidtank, der hier nicht dargestellt ist, gelangen. Das Fluid fließt über den Einsatz 3 direkt in den Fluidschlauch 6, wobei der Einsatz 3 quasi als Trichter für den Fluidschlauch 6 dient, womit das eingefüllte Fluid schnell und effektiv eingefüllt werden kann. Unnötige Prallflächen und Toträume für das Fluid werden so vorteilhaft vermieden.

Die gekippte Stellung des Einsatzes 3 wird dadurch begrenzt, dass die Führungszapfen 5 des Einsatzes 3 innerhalb der seitlichen Aussparungen 7 an deren vorderes Ende anschlagen. Ein weiteres Verschwenken des Einsatzes 3 nach vorn aus dem Gehäuse heraus ist damit unmöglich. Der Einsatz 3 ist hierdurch in der Einfüllposition stabil gelagert, was ein Einfüllen von Fluid erleichtert.

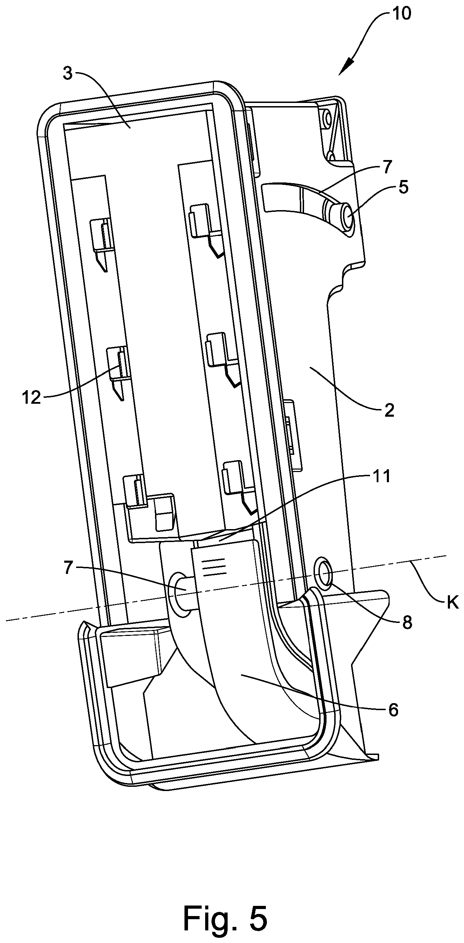

Fig. 5 zeigt eine Beraumung 1 ohne Blende 4 in einer perspektivischen Ansicht von schräg vorn. Die Beraumung 1 weist ein Gehäuse 2 auf, welches nach vorn hin offen ausgebildet ist und in dem ein Einsatz 3 aufgenommen ist. Der Einsatz 3 befindet sich in der gezeigten Ausführungsform in einer Schließposition und ist damit vollständig in dem Gehäuse 2 aufgenommen. Das Gehäuse 2 weist im unteren Bereich zwei seitliche Lagerbuchsen 8 auf, die gegenüberliegend angeordnet sind und von denen hier nur eine zu sehen ist. Der Einsatz 3 ist mit Lagerzapfen 9, hier nicht gezeigt, in den seitlichen Lagerbuchsen 8 gelagert und um eine Kippachse K verschwenkbar, wobei die Kippachse K durch die seitlichen Lagerbuchsen 8 verläuft.

Das Gehäuse 2 weist im oberen Bereich zwei seitliche Aussparungen 7 in Form von länglichen Führungsschlitzen auf, wobei in der gezeigten Ansicht nur eine Aussparung 7 zu sehen ist. In die seitlichen Aussparungen 7 greifen Führungszapfen 5 des Einsatzes 3 ein, wodurch dieser in einer möglichen Verschwenkbewegung um die Kippachse K geführt werden kann. So kann der Einsatz 3 nach vorn in Richtung des Betrachters aus dem Gehäuse 2 herausverschwenkt werden.

Auf der vorderen Seite, die dem Betrachter zugewandt ist, sind am Einsatz 3 insgesamt drei paarweise angeordnete Rastaufnahmen 12 vorgesehen, an denen eine Blende 4 über entsprechende Rastnasen 13 - beides hier nicht gezeigt - angeordnet werden kann. Am unteren Ende des Einsatzes 3 bildet dieser eine Schlauchhalterung 11 aus. Dieser ist in der gezeigten Ausführungsform als eine Schlauchtülle ausgebildet, auf die ein Fluidschlauch 6 von unten aufgesteckt ist. Der Fluidschlauch schließt damit direkt unten an den Einsatz 3 an. Weiterhin ist der Fluidschlauch 6 nach unten hin aus dem Gehäuse 2 herausgeführt. Zu diesem Zweck ist das Gehäuse 2 nach unten hin wenigstens zum Teil offen ausgebildet.

Am oberen Ende des Gehäuses 2 ist auf der vom Betrachter abgewandten Seite ein Anbauteil 10 angeordnet, welches aus der gezeigten Perspektive vom Gehäuse 2 teilweise verdeckt wird.

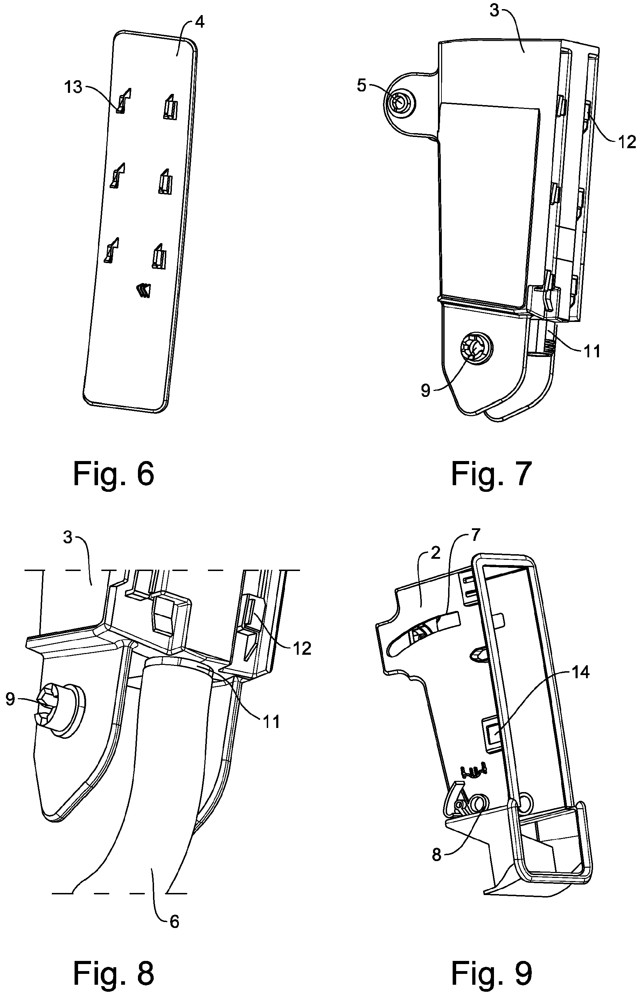

Fig. 6 zeigt eine Blende 4 mit Rastnasen 13, wobei die Rastnasen 13 in der gezeigten Ausführungsform paarweise angeordnet sind, um von entsprechenden Rastaufnahmen 12 an einem Einsatz 3, beides hier nicht gezeigt, aufgenommen werden zu können. So kann der Einsatz 3 schnell und einfach mit einer Blende 4 versehen werden. Die Blende 6 dient hierbei als Verkleidung für den Einsatz 3. In der gezeigten Ausführungsform weist die Blende 4 eine rechteckige Form mit abgerundeten Ecken auf. Die Erstreckung der Rechteckform ist hochkant, das heißt, die langen Seiten sind senkrecht ausgerichtet.

Fig. 7 zeigt einen Einsatz 3 ohne zusätzliche Anbauteile. Der Einsatz 3 ist bereits wenigstens zum Teil in Fig. 2, 3, 4 und 5 gezeigt. Der Einsatz 3 weist eine im Wesentlichen quaderförmige Grundform mit senkrechter Längserstreckung auf. Die Quaderform ist nach unten hin leicht verjüngt ausgebildet, wodurch sich ein Trichtereffekt für den Einsatz 3 einstellt. Der Einsatz 3 ist nach oben hin offen ausgebildet. Am unteren Ende ist eine Schlauchhalterung 11 in Form einer Schlauchtülle angeordnet, welche nahtlos in den Einsatz 3 übergeht. Nach unten hin sind ebenfalls am Einsatz 3 zwei sich nach unten erstreckende parallel zueinander angeordnete Schwingflügel mit jeweils einem Lagerzapfen 9 angeordnet. Es ist außerdem deutlich zu erkennen, dass die Schlauchhalterung 11 gegenüber den Lagerzapfen 9 nach vorn versetzt angeordnet ist. Das heißt, dass eine durch die Lagerzapfen 9 verlaufende Kippachse K, hier nicht separat eingezeichnet, die Schlauchhalterung 11 nicht kreuzt.

Die nach vorn verlagerte Schlauchhalterung 11 hat den Vorteil, dass diese sich in der gekippten Einfüllposition am untersten Punkt des Einsatzes 3 befindet, sodass eingefülltes Fluid zum einen schnell ablaufen kann und zum anderen kein Fluid im Einsatz 3 zurückbleiben kann, da dieses sich der Schwerkraft folgend am untersten Punkt im Einsatz 3 sammeln würde, was in diesem Fall sofort durch die Schlauchhalterung 11, die gleichzeitig eine untere Öffnung des Einsatzes 3 ausbildet, ablaufen wird.

Im oberen Bereich des Einsatzes 3 sind zwei nach hinten, d.h. vom Betrachter aus nach link, parallel zueinander angeordnete Flügel mit jeweils einem nach außen abstehenden Führungszapfen 5 angeordnet, wobei hier nur ein Flügel mit Führungszapfen 5 zu sehen ist.

Auf der vorderen Seite des Einsatzes 3, vom Betrachter aus nach rechts zeigend, sind paarweise sechs Rastaufnahmen 12 angeordnet, an die eine Blende 4 mit entsprechenden Rastnasen 13, so wie sie in Fig. 6 gezeigt sind, befestigt werden kann.

Würde man ein Fluid von oben in den Einsatz 3 einfüllen, so würde es direkt aus der unteren Öffnung in Form der Schlauchhalterung 11 wieder herausfließen. Mit dem Einsatz 3 wird so eine Trichterwirkung erzielt.

Der Einsatz 3 ist in der gezeigten Ausführungsform als ein einteiliges Spritzgussstück ausgebildet. So kann dieses schnell, einfach und kostengünstig in großer Stückzahl bei hoher Qualität und Maßhaltigkeit gefertigt werden.

Fig. 8 zeigt eine Teilansicht eines Einsatzes 3 mit einem daran angeordneten Fluidschlauch 6, wobei die Teilansicht den u.a**.** in Fig. 7 dargestellten Einsatz 3 zum Teil zeigt. Hierbei ist der untere Bereich des Einsatzes 3 mit zwei parallel angeordneten nach unten erstreckenden Schwingflügeln und daran angeordneten Führungszapfen 9 gezeigt. Ebenso ist am unteren Ende des Einsatzes 3 eine Schlauchhalterung 11 in Form einer Schlauchtülle angeordnet, auf die der Fluidschlauch 6 aufgesteckt ist und nach unten hin weggeführt ist. Der Fluidschlauch 6 und die Schlauchhalterung 11 bilden so eine fluiddichte Verbindung aus. Das heißt, dass beim Durchfließen von Fluid nichts austreten kann.

Darüber hinaus ist in Fig. 8 ein Paar Rastaufnahmen 12 gezeigt, welche vorn am unteren Ende des Einsatzes 3 angeordnet sind.

Fig. 9 zeigt ein Gehäuse 2 in einer perspektivischen Ansicht von schräg unten. Das Gehäuse 2 ist auch bereits u.a. in Fig. 1, 2, 3, 4 und 5 gezeigt. Das Gehäuse 2 weist eine im Wesentlichen quaderförmige Grundform mit senkrechter Längserstreckung auf. Das Gehäuse 2 ist nach vorn hin, d.h. vom Betrachter aus nach links, offen ausgebildet. Außerdem ist das Gehäuse 2 ebenfalls nach unten hin offen ausgebildet. Im oberen Bereich weist das Gehäuse 2 zwei gegenüberliegend angeordnete seitliche Aussparungen 7 in Form von länglichen Führungsschlitzen auf. Sie weisen eine Kreisbogenform auf, deren Mittelpunkt in zwei gegenüberliegend angeordneten seitlichen Lagerbuchsen 8 liegt, wobei die Lagerbuchsen 8 im unteren Bereich des Gehäuses 2 angeordnet sind.

In der Mitte der senkrechten Längserstreckung des Gehäuses 2 sind seitlich nach vorn hin zwei gegenüberliegende Halteelemente 14 angeordnet, wobei hier nur eines der beiden zu sehen ist, da das andere vom Gehäuse 2 selbst verdeckt wird. Die Halteelemente 14 sind als Erhebungen ausgebildet, die eine nach vorn gerichtete Kontaktfläche aufweisen, an die in einer an einem Fahrzeug montierten Position bspw. eine Karosserie 100, die hier nicht gezeigt ist, anschließen kann. Die Halteelemente 14 dienen der Halterung des Gehäuses 2 und damit der Beraumung 1 insgesamt an einer Karosserie 100 eines Fahrzeugs.

Die gezeigte Ausführungsform des Gehäuses 2 ist vorteilhaft als ein einteiliges Spritzgussstück ausgebildet. So kann dieses schnell, einfach und kostengünstig in großer Stückzahl bei hoher Qualität und Maßhaltigkeit gefertigt werden.

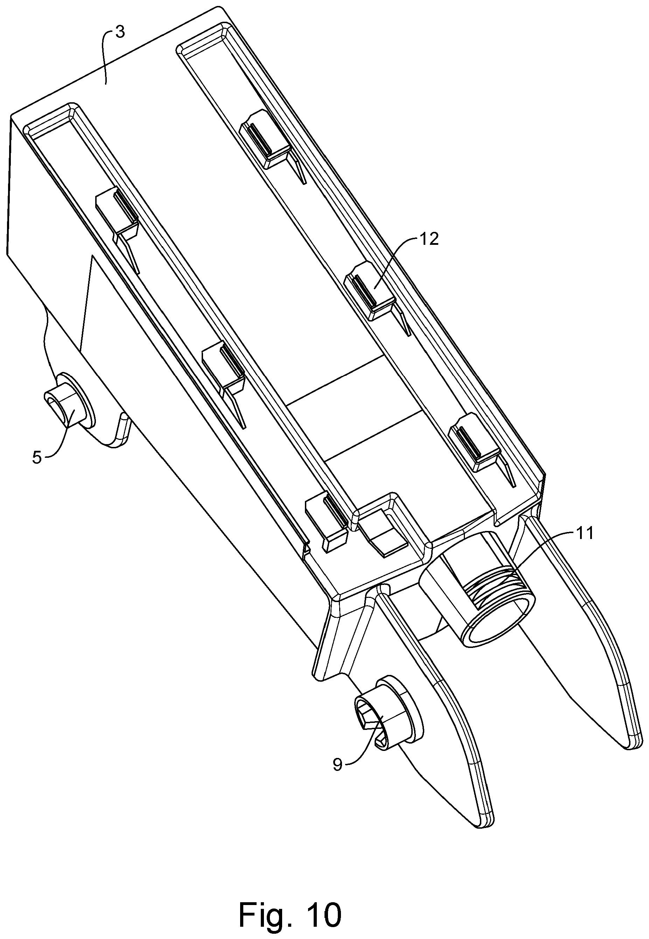

Fig. 10 zeigt einen Einsatz 3, so wie er bereits in Fig. 7 gezeigt ist, jedoch in einer perspektivischen Ansicht von schräg unten, sodass die unten am Einsatz 3 angeordnete Schlauchhalterung 11 in Form einer Schlauchtülle gut zu sehen ist. Es ist deutlich zu erkennen, dass die Schlauchtülle nach vorn versetzt zu den Lagerzapfen 9, hier nur einer zu sehen, angeordnet ist. Der Vorteil der nach vorn verlagerten Anordnung wurde bereits in der vorangegangenen Beschreibung erläutert.

In der gezeigten Ausführungsform weist die Schlauchhalterung 11 weiterhin radial umlaufende Vorsprünge auf, die einem aufgesteckten Fluidschlauch 6, hier nicht gezeigt, zusätzlichen Halt verschaffen.

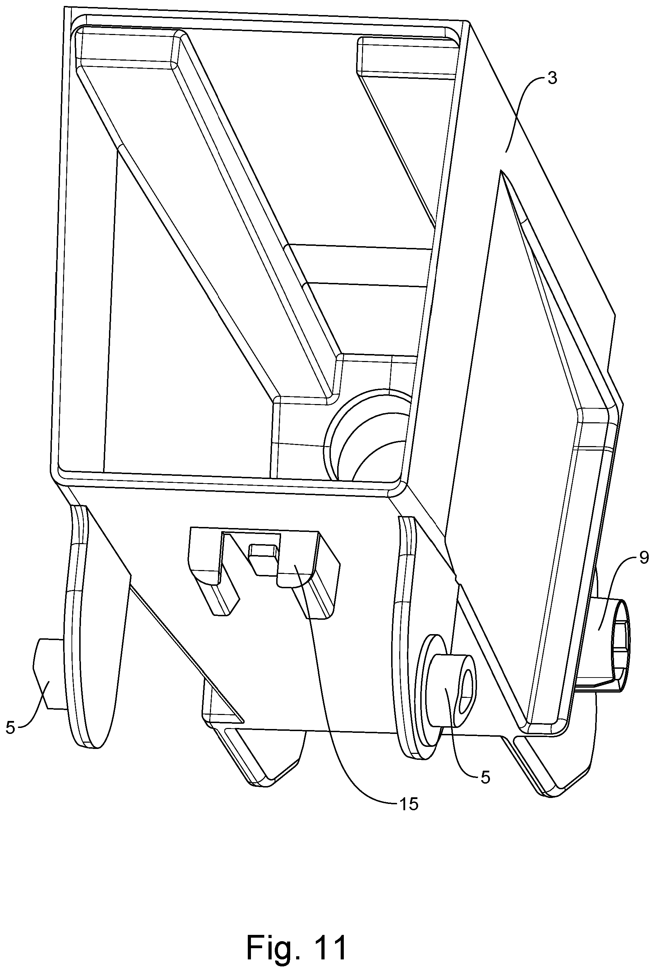

Fig. 11 zeigt eine perspektivische Ansicht eines Einsatzes 3 einer Beraumung 1 von hinten und schräg oben. Der Einsatz 3 entspricht hierbei den bereits in den vorangegangenen Figuren gezeigten Ausführungsform. Es ist deutlich zu erkennen, dass der Einsatz 3 nach oben hin, also dem Betrachter zugewandt, offen ausgebildet ist. Darüber hinaus ist eine untere Öffnung im Einsatz 3 zu sehen, durch die eingefülltes Fluid ablaufen kann. Die untere Öffnung ist gleichzeitig die Schlauchhalterung 11, die hier nicht zu sehen ist, da sie vom Einsatz 3 selbst verdeckt wird. An der Rückseite des Einsatzes 3 ist im oberen Bereich eine Halterung 15 für Anbauteile angeordnet. In der gezeigten Ansicht sind die beiden nach hinten erstreckenden Flügel mit jeweils seitlich nach außen gerichteten Führungszapfen 5 zu sehen.

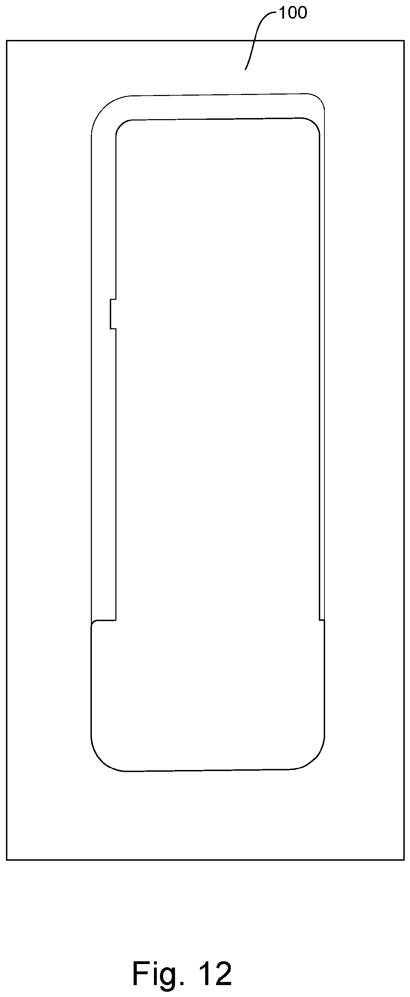

Fig. 12 zeigt einen Teilausschnitt einer Karosserie 100, so wie er auch bereits in den vorangegangenen Fig. 1, 3 und 4 gezeigt ist. Die Karosserie 100 weist hierbei eine Aussparung auf, an welche eine Beraumung 1, hier nicht gezeigt, bündig anschließen kann. Die Form der Aussparung ist entsprechend der Form der Vorderseite des Gehäuses 2 der Beraumung 1 ausgebildet.

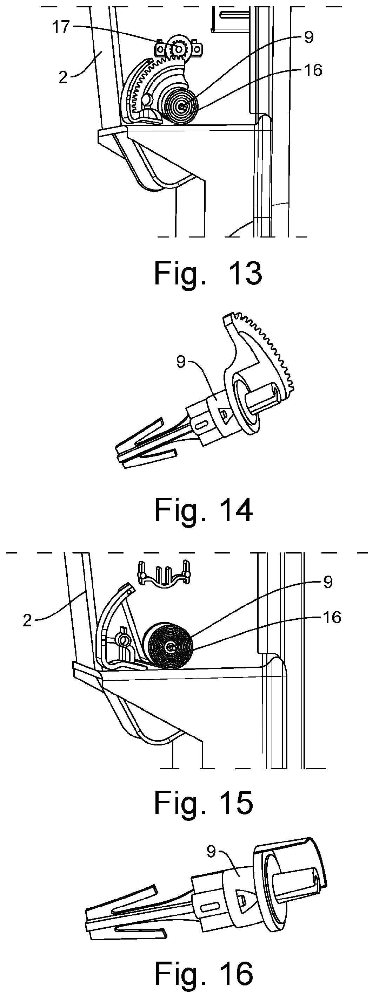

Fig. 13 zeigt eine Teilansicht der Beraumung 1 mit Feder-Dämpfer-Mechanismus, welcher im unteren Bereich eines Gehäuses 2 angeordnet ist. Sie ist am Lagerzapfen 9 angeordnet und steht mit diesem in Wirkverbindung. Es ist ausreichend, dass die Beraumung 1 nur einen Feder-Dämpfer-Mechanismus aufweist, welcher entsprechend auf nur einer Seite des Gehäuses 2 angeordnet ist. Es ist aber auch in einer alternativen Ausführungsform denkbar, dass auf beiden Seiten des Gehäuses 2 jeweils ein Feder-Dämpfer-Mechanismus vorgesehen ist.

Koaxial zum Lagerzapfen 9 ist ein Federelement 16 in Form einer Spiralfeder angeordnet. Federelement 16 und Lagerzapfen 9 stehen hierbei in Wirkverbindung zueinander, sodass eine Drehbewegung des Lagerzapfens 9 ein Spannen des Federelements 16 bewirkt. Umgekehrt bewirkt ein Entspannen des Federelements 16 eine Drehbewegung des Lagerzapfens 9. So kann gewährleistet werden, dass ein mit den Lagerzapfen 9 in Verbindung stehender Einsatz 3 -hier nicht gezeigt - von dem Federelement 16 getrieben immer wieder in die gleiche Position zurückkehrt, sofern keine Kraftbeaufschlagung von außen auf den Einsatz 3 erfolgt. Eine solche Position kann bspw. eine Einfüllposition sein, sodass der Einsatz 3 nur durch eine Kraftbeaufschlagung von außen in eine Schließposition verbracht werden kann und ohne Arretierung immer wieder in die Einfüllposition schwenken würde.

Ebenfalls ist an dem Lagerzapfen 9 ein Zahnrad angeordnet, welches eine Drehbewegung des Lagerzapfens 9 auf ein Dämpfungselement 17 überträgt, wobei das Dämpfungselement 17 in der gezeigten Ausführungsform oberhalb des Lagerzapfens 9 achsparallel angeordnet ist. Das Zahnrad ist als ein Kreissegment ausgebildet. Das Dämpfungselement 17 weist ebenfalls ein Zahnrad auf, auf das die Drehbewegung des vorgenannten Zahnrads bzw. Zahnradsegments übertragen wird. Das Dämpfungselement 17 bewirkt eine Dämpfung in Drehrichtung. Das heißt, die Drehbewegung des Lagerzapfens 9 wird über die hier beschriebene Zahnradpaarung auf das Dämpfungselement 17 übertragen und gedämpft.

Dadurch wird mit Freigabe des Einsatzes 3 dieser, getrieben vom Federelement 16, bspw. sanft aus der Schließposition in die Einfüllposition schwenken. Ohne Dämpfungselement 17 wäre die Kipp- bzw. Verschwenkbewegung schnell und ungebremst, was im ungünstigsten Fall bspw. zu Schäden am Gehäuse 2 oder am Einsatz 3 selbst führt.

Fig. 14 zeigt einen Lagerzapfen 9 mit Zahnkranz an einem äußeren Ende, wobei der Zahnkranz als Kreissegment ausgebildet ist. In der gezeigten Ausführungsform ist das Kreissegment ein Viertelkreis mit Zähnen am äußeren Kreisradius. Im Kreismittelpunkt ist ein Zapfen angeordnet, auf dem ein Federelement 16 - hier nicht gezeigt - anordenbar ist, wobei ein Ende des Federelements 16 am Zapfen und ein anderes Ende am Gehäuse 2 - hier ebenfalls nicht gezeigt - eingreift und so eine Federwirkung zwischen Lagerzapfen 9 und Gehäuse 2 bewirkt. Der Lagerzapfen 9 weist außerdem in Längserstreckung passfederartige Erhebungen auf, die in entsprechende Aussparungen im Einsatz 3 - hier nicht gezeigt - eingreifen und so die Federwirkung des Federelements 16 über der Lagerzapfen 9 auf den Einsatz 3 übertragen. Eine Drehbewegung des Lagerzapfens 9 ist durch die passfederartigen Erhebungen demnach direkt mit einer Schwenk- bzw. Kippbewegung des Einsatzes 3 gekoppelt.

In der gezeigten Ausführungsform weist der Lagerzapfen 9 am äußeren, dem Zahnkranz gegenüberliegenden Ende ein Paar Spreizflügel auf, wodurch der Lagerzapfen 9 durch Einstecken in eine Lagerbuchse schnell und einfach montiert werden kann und ein Wiederherausrutschen effektiv verhindert wird. Hierdurch ist eine einfache Klick-Montage des Lagerzapfens 9 möglich.

Fig. 15 zeigt eine Teilansicht der Beraumung 1 ohne Dämpfungselement 17 und mit Federelement 16. Die gezeigte Ansicht entspricht im Wesentlichen der aus Fig. 13, jedoch ohne Dämpfungselement 17, weshalb auch der Zahnkranz an dem Lagerzapfen 9 weggelassen ist. Das Federelement 16 greift mit einem Ende am Gehäuse 2 an und mit einem anderen Ende am Lagerzapfen 9, womit eine Federwirkung zwischen Gehäuse 2 und Lagerzapfen 9 und dadurch auch mit einen Einsatz 3 - hier nicht gezeigt - der mit dem Lagerzapfen 9 verbunden ist, bewirkt wird.

Fig. 16 zeigt einen Lagerzapfen 9 ohne Zahnkranz, so wie er in der in Fig. 15 gezeigten Ausführungsform vorgesehen ist. Der Lagerzapfen 9 entspricht hierbei dem Lagerzapfen 9, der in Fig. 14 gezeigt ist, jedoch ohne Zahnkranz.

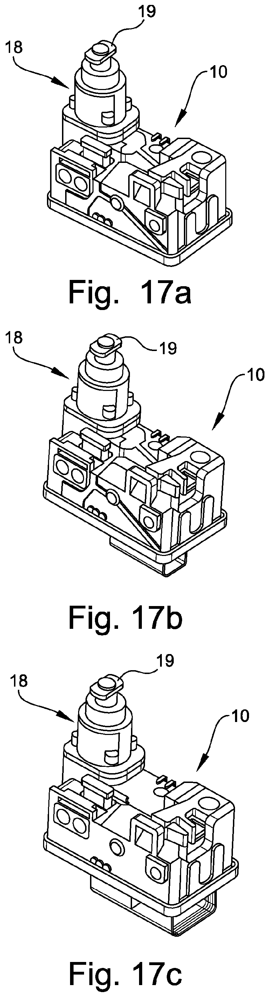

Fig. 17a-c zeigen verschiedene Ausführungsformen eines Anbauteils 10, welches über eine Halterung 15 an einem Gehäuse 2 - beides hier nicht gezeigt - anbringbar ist. Fig. 17a zeigt eine erste Ausführungsform des Anbauteils 10, welches eine rein mechanische Push-Push-Verschlussfunktion bzw. Pusch-Push-Mechanismus aufweist. Eine solche Funktion ist auch als Push-to-open-Mechanismus bekannt. Durch Druck auf einen Schließzylinder 18, welcher in Fig. 17a links oben am Anbauteil 10 angeordnet ist und sich senkrecht nach oben hin erstreckt, wird dieser freigegeben, wobei der Schließzylinder 18 zum einen teleskopartig ausfährt und zum anderen eine Viertelumdrehung vollzieht. Am äußeren Ende des Schließzylinder 18 ist ein querliegender Verriegelungsstift 19 angeordnet, welcher entsprechend der Drehung des Schließzylinders 18 mitbewegt wird. Der Verriegelungsstift 19 ist dazu ausgebildet, in eine entsprechende Aussparung an einem Einsatz 3 - hier nicht gezeigt - einzugreifen.

Das in Fig. 17a gezeigte Anbauteil 10 befindet sich in der Position, bei der sich ein damit in Verbindung stehender Einsatz 3 in der Schließposition befindet. Der Schließzylinder 18 ist hierbei in einem eingefahrenen Zustand und der Verriegelungsstift 19 liegt quer, womit er den Einsatz 3 formschlüssig in der Schließposition hält und verriegelt. Wird nunmehr Druck von außen auf den Einsatz 3 ausgeübt, wird dieser auf den Schließzylinder 18 übertragen, der dadurch ein wenig gestaucht wird. Diese Stauchung aktiviert den Pusch-Push-Mechanismus, das heißt, mit Weglassen der Druckbeaufschlagung fährt der Schließzylinder 18 teleskopartig aus und schiebt dabei den Einsatz 3 an, welcher sodann von der Schließposition in die Einfüllposition schwenkt. Gleichzeitig vollzieht der Verriegelungsstift 19 eine Viertelumdrehung, wodurch dieser aus der Aussparung am Einsatz 3 gleitet und damit die formschlüssige Verbindung zwischen Anbauteil 10 und Einsatz 3 aufgehoben wird, sodass der Einsatz 3 vollständig in die Einfüllposition schwenken kann und nicht mehr vom Anbauteil 10 zurückgehalten wird.

Beim Überführen des Einsatzes 3 von der Einfüllposition in die Schließposition wird der oben geschilderte Ablauf in umgekehrter Reihenfolge absolviert. Am Ende befindet sich der Einsatz 3 wieder in der Schließposition und wird durch das Anbauteil 10 mit dem Verriegelungsstift 19 in dieser Position gehalten. Der Einsatz 3 kann so nicht mehr selbsttätig wieder in die Einfüllposition schwenken.

Fig. 17b zeigt eine zweite Ausführungsform des Anbauteils 10, so wie es bereits in Fig. 17a gezeigt ist. Im Unterschied dazu weist die hier gezeigte Ausführungsform zusätzlich im Inneren einen E-Stellmotor auf, welcher über einen 2-poligen Anschluss und über eine Steuerung angesteuert werden kann. Der 2-polige Anschluss ist hierbei in der Fig. 17b vom Betrachter aus gesehen unterhalb des Anbauteils angeordnet und als Steckerbuchse ausgebildet. Der E-Stellmotor im Inneren des Anbauteils 10 hat die Funktion den Schließzylinder elektromotorisch zu bewegen, sodass zum Verbringen des Einsatzes 3 von der Schließposition in die Einfüllposition keine anfängliche Druckbeaufschlagung von außen erforderlich ist. Ein solches Anbauteil 10 kann auch als 2-poliger ZV-Steller bzw. als 2-poliger Zentralverriegelungssteller bezeichnet werden.

Fig. 17c zeigt eine dritte Ausführungsform des Anbauteils 10, so wie es bereits in Fig. 17b gezeigt ist, mit dem Unterschied, dass statt eines 2-poligen Anschlusses ein 4-poliger Anschluss vorgesehen ist. Dementsprechend ist die Steckerbuchse für den 4-poligen Anschluss größer ausgebildet als die vom 2-poligen Anschluss. Das gezeigten Anbauteil 10 weist die gleichen Funktionen auf, wie das Anbauteil 10 aus Fig. 17b. Schließlich kann ein solches Anbauteil 10 auch als 4-poliger ZV-Steller bzw. als 4-poliger Zentralverriegelungssteller bezeichnet werden.

Obwohl die Erfindung im Detail durch die vorteilhaften Ausführungsbeispiele näher illustriert und beschrieben wurde, so ist die Erfindung nicht durch die offenbarten Beispiele eingeschränkt. Andere Variationen können vom Fachmann hieraus abgeleitet werden, ohne den Schutzumfang der Erfindung zu verlassen.

### Bezugszeichenliste

- 1: Beraumung
- 2: Gehäuse
- 3: Einsatz
- 4: Blende
- 5: Führungszapfen
- 6: Fluidschlauch
- 7: seitliche Aussparung
- 8: seitliche Lagerbuchse
- 9: Lagerzapfen
- 10: Anbauteil
- 11: Schlauchhalterung
- 12: Rastaufnahme
- 13: Rastnase
- 14: Halteelement
- 15: Halterung für Anbauteil
- 16: Federelement
- 17: Dämpfungselement
- 18: Schließzylinder
- 19: Verriegelungsstift

- 100: Karosserie

- K: Kippachse

## Patentansprüche

1. Beraumung (1) zur Leitung von Fluiden in einen dafür vorgesehenen Fluidbehälter, wobei die Beraumung (1) in einer Karosserie (100) eines Fahrzeugs integriert ist, wenigstens aufweisend
ein Gehäuse (2) mit einer unteren Aussparung, einer vorderen Aussparung und wenigstens einer seitlichen Aussparung (7) sowie wenigstens einer seitlichen Lagerbuchse (8),
einen Einsatz (3), welcher wenigstens zum Teil in dem Gehäuse (2) aufgenommen ist und eine obere Öffnung zum Einfüllen eines Fluids und eine untere Öffnung zum Auslassen des Fluids aufweist, wobei die obere Öffnung einen größeren Querschnitt als die untere Öffnung aufweist und an der unteren Öffnung zusätzlich eine sich nach unten erstreckende Schlauchhalterung (11) angeordnet ist, wenigstens einen Lagerzapfen (9), der seitlich am Einsatz (3) angeordnet ist und sich nach außen hin erstreckt, wobei er in die wenigstens eine seitliche Lagerbuchse (8) am Gehäuse (2) eingreift, sodass sie eine gemeinsame Kippachse (K) ausbilden, um die der Einsatz (3) innerhalb des Gehäuses (2) verschwenkbar ist und so von einer nicht gekippten Schließposition in eine gekippte Einfüllposition oder umgekehrt verbringbar ist, **dadurch gekennzeichnet dass** die Beraumung zusätzlich aufweist:
wenigstens einen Führungszapfen (5), der sich seitlich vom Einsatz (3) nach außen hin erstreckt und dabei in die wenigstens eine seitliche Aussparung (7) am Gehäuse (2) eingreift, sodass für den Einsatz (3) sowohl eine Bewegungsführung als auch eine Bewegungsbegrenzung ausgebildet ist, durch welche die Schließposition und die Einfüllposition des Einsatzes (3) definiert sind,
einen Fluidschlauch (6), welcher an die Schlauchhalterung (11) an der untere Öffnung des Einsatzes (3) anschließt und durch die untere Aussparung am Gehäuse (2) aus dem Gehäuse (2) herausgeführt ist,
eine Blende (4), die mit wenigstens einer an der Blende (4) angeordneten Rastnase (13) an dem Einsatz (3) angeordnet ist, wobei die wenigstens eine Rastnase (13) in wenigstens eine entsprechende Rastaufnahme (12), welche an dem Einsatz (3) angeordnet ist, eingreift, und wobei die Blende (4) in der Schließposition die vordere Aussparung des Gehäuses (2) verschließt und bündig mit der Karosserie (100) des Fahrzeugs abschließt.

2. Beraumung (1) nach Patentanspruch 1, **dadurch gekennzeichnet, dass** der Einsatz (3) einteilig ausgebildet ist.

3. Beraumung (1) nach Patentanspruch 1, **dadurch gekennzeichnet, dass** die untere Öffnung am tiefsten Punkt des Einsatzes (3) angeordnet ist.

4. Beraumung (1) nach Patentanspruch 3, **dadurch gekennzeichnet, dass** die untere Öffnung als eine pyramidal oder konisch geformte Ablauföffnung ausgebildet ist.

5. Beraumung (1) nach Patentanspruch 1, **dadurch gekennzeichnet, dass** die untere Öffnung mit der sich nach unten erstreckenden Schlauchhalterung (11) mit dem daran angeschlossenen Fluidschlauch (6) versetzt zur Kippachse (K) angeordnet ist.

6. Beraumung (1) nach Patentanspruch 1, **dadurch gekennzeichnet, dass** die Schlauchhalterung (11) als eine Schlauchtülle ausgebildet ist, auf die der Fluidschlauch (6) aufsteckbar ist.

7. Beraumung (1) nach Patentanspruch 1, **dadurch gekennzeichnet, dass** die wenigstens eine seitliche Aussparung (7) am Gehäuse (2) als Kreisbogen mit Mittelpunkt in der Kippachse (K) ausgebildet ist.

8. Beraumung (1) nach Patentanspruch 1, **dadurch gekennzeichnet, dass** das Gehäuse (2) zusätzlich eine oder mehrere Halterungen (15) für ein oder mehrere Anbauteile (10) aufweist.

9. Beraumung (1) nach Patentanspruch 8, **dadurch gekennzeichnet, dass** das Anbauteil (10) ein Verschlusszylinder ist, welcher gegenüberliegend von der vorderen Aussparung des Gehäuses (2) angeordnet ist.

10. Beraumung (1) nach Patentanspruch 1, **dadurch gekennzeichnet, dass** an dem Gehäuse (2) auf wenigstens einer Seite wenigstens ein Federelement (16) angeordnet ist, welches eine Wirkverbindung mit wenigstens einem Lagerzapfen (9) aufweist und koaxial zur Kippachse (K) angeordnet ist.

11. Beraumung (1) nach Patentanspruch 10, **dadurch gekennzeichnet, dass** an dem Gehäuse wenigstens ein Dämpfungselement (17) angeordnet ist, welches eine Wirkverbindung mit dem wenigstens einen Lagerzapfen (9) aufweist und koaxial oder parallel zur Kippachse (K) angeordnet ist.

12. Beraumung (1) nach Patentanspruch 1, **dadurch gekennzeichnet, dass** das Gehäuse (2) wenigstens ein Halteelement (14) zur Halterung der Beraumung (1) an der Karosserie aufweist.

13. Beraumung (1) nach Patentanspruch 1, **dadurch gekennzeichnet, dass** das Gehäuse (2) wenigstens einen akustischen und/oder optischen Signalgeber aufweist.

14. Beraumung (1) nach Patentanspruch 1, **dadurch gekennzeichnet, dass** das Gehäuse (2) wenigstens ein Lichtelement zur Beleuchtung des Einsatzes (3) aufweist.

## Claims

1. Spatial arrangement (1) for delivering fluids into a fluid container provided for this purpose, the spatial arrangement (1) being integrated into a body (100) of a vehicle, at least comprising
a housing (2), having a lower recess, a front recess and at least one lateral recess (7) as well as at least one lateral bearing bush (8),
an insert (3), which is received at least in part in the housing (2) and which has an upper opening for filling a fluid in and a lower opening for letting the fluid out, the upper opening having a larger cross section than the lower opening, and a downwardly extending hose mounting (11) additionally being arranged at the lower opening,
at least one bearing journal (9), which is arranged laterally at the insert (3) and extends outwards, engaging in the at least one lateral bearing bush (8) at the housing (2) in such a way that they form a common tilt axis (K), about which the insert (3) is pivotable within the housing (2) and can thus be brought from an untilted closed position into a tilted filling position or vice versa,
**characterised in that** the spatial arrangement additionally comprises:
at least one guide journal (5), which extends laterally outwards from the insert (3) and thus engages in the at least one lateral recess (7) at the housing (2), in such a way that, for the insert (3), both a movement guide and a movement delimitation are formed, by means of which the closed position and the filling position of the insert (3) are defined,
a fluid hose (6), which connects to the hose mounting (11) at the lower opening of the insert (3) and is passed out of the housing (2) through the lower recess at the housing (2),
a panel (4), arranged with at least one locking tab (13), arranged at the panel (4), at the insert (3), the at least one locking tab (13) engaging in at least one corresponding locking recess (12) arranged at the insert (3), and the panel (4), in the closed position, sealing the front recess of the housing (2) and ending flush with the body (100) of the vehicle.

2. Spatial arrangement (1) according to claim 1, **characterised in that** the insert (3) is formed in a single part.

3. Spatial arrangement (1) according to claim 1, **characterised in that** the lower opening is arranged at the lowest point of the insert (3).

4. Spatial arrangement (1) according to claim 3, **characterised in that** the lower opening is formed as a pyramidally or conically shaped drain opening.

5. Spatial arrangement (1) according to claim 1, **characterised in that** the lower opening is arranged with the downwardly extending hose mounting (11), having the fluid hose (6) arranged thereon, offset from the tilt axis (K).

6. Spatial arrangement (1) according to claim 1, **characterised in that** the hose mounting (11) is formed as a hose connector onto which the fluid hose (6) can be plugged.

7. Spatial arrangement (1) according to claim 1, **characterised in that** the at least one lateral recess (7) at the housing (2) is formed as an arc having a centre point on the tilt axis (K).

8. Spatial arrangement (1) according to claim 1, **characterised in that** the housing (2) additionally comprises one or more mountings (15) for one or more attachment parts (10).

9. Spatial arrangement (1) according to claim 8, **characterised in that** the attachment part (10) is a sealing cylinder which is arranged opposite the front recess of the housing (2).

10. Spatial arrangement (1) according to claim 1, **characterised in that** at least one spring element (16) is arranged at the housing (2) on at least one face and is operatively connected to at least one bearing journal (9) and arranged coaxial with the tilt axis (K).

11. Spatial arrangement (1) according to claim 10, **characterised in that** at least one damping element (17) is arranged at the housing and is operatively connected to the at least one bearing journal (9) and arranged coaxial with or parallel to the tilt axis (K).

12. Spatial arrangement (1) according to claim 1, **characterised in that** the housing (2) has at least one holding element (14) for mounting the spatial arrangement (1) on the body.

13. Spatial arrangement (1) according to claim 1, **characterised in that** the housing (2) has at least one acoustic and/or optical signal generator.

14. Spatial arrangement (1) according to claim 1, **characterised in that** the housing (2) has at least one light element for illuminating the insert (3).

## Revendications

1. Disposition spatiale (1) pour le transport de fluides dans un réservoir de fluide prévu à cet effet, dans laquelle la disposition spatiale (1) est intégrée dans une carrosserie (100) d'un véhicule, comportant au moins :
un boîtier (2) avec un évidement inférieur, un évidement avant et au moins un évidement latéral (7) ainsi qu'au moins un coussinet de palier latéral (8),
un insert (3) qui est au moins en partie reçu dans le boîtier (2) et comporte une ouverture supérieure pour le remplissage d'un fluide et une ouverture inférieure pour l'évacuation du fluide, dans laquelle l'ouverture supérieure présente une section transversale plus grande que l'ouverture inférieure, et un support de tuyau (11) s'étendant vers le bas est en plus agencé sur l'ouverture inférieure, au moins un tourillon (9) qui est agencé latéralement sur l'insert (3) et s'étend vers l'extérieur, dans laquelle il s'engage dans le au moins un coussinet de palier latéral (8) sur le boîtier (2), de telle sorte qu'ils forment un axe de basculement commun (K) autour duquel l'insert (3) peut pivoter à l'intérieur du boîtier (2) et peut ainsi être amené d'une position de fermeture non basculée à une position de remplissage basculée ou inversement,
**caractérisée en ce que** la disposition spatiale comporte de plus :
au moins un axe de guidage (5) qui s'étend latéralement depuis l'insert (3) vers l'extérieur et qui s'engage ainsi dans le au moins un évidement latéral (7) sur le boîtier (2), de telle sorte qu'aussi bien un guidage de mouvement qu'une limitation de mouvement sont formés pour l'insert (3), au moyen desquels la position de fermeture et la position de remplissage de l'insert (3) sont définies, un tuyau de fluide (6) qui se raccorde sur le support de tuyau (11) au niveau de l'ouverture inférieure de l'insert (3) et qui sort du boîtier (2) à travers l'évidement inférieur sur le boîtier (2),
un cache (4) qui est agencé sur l'insert (3) avec au moins un ergot d'enclenchement (13) agencé sur le cache (4), dans laquelle le au moins un ergot d'enclenchement (13) s'engage dans au moins un logement d'enclenchement (12) correspondant qui est agencé sur l'insert (3), et dans laquelle le cache (4) ferme, dans la position de fermeture, l'évidement avant du boîtier (2) et est affleurant à la carrosserie (100) du véhicule.

2. Disposition spatiale (1) selon la revendication 1, **caractérisée en ce que** l'insert (3) est formé d'un seul tenant.

3. Disposition spatiale (1) selon la revendication 1, **caractérisée en ce que** l'ouverture inférieure est agencée au point le plus bas de l'insert (3).

4. Disposition spatiale (1) selon la revendication 3, **caractérisée en ce que** l'ouverture inférieure est réalisée sous la forme d'une ouverture de sortie formée de façon pyramidale ou conique.

5. Disposition spatiale (1) selon la revendication 1, **caractérisée en ce que** l'ouverture inférieure est agencée décalée par rapport à l'axe de basculement (K) avec le support de tuyau (11) s'étendant vers le bas en ayant le tuyau de fluide (6) raccordé à celui-ci.

6. Disposition spatiale (1) selon la revendication 1, **caractérisée en ce que** le support de tuyau (11) est réalisé sous la forme d'un embout de tuyau sur lequel le tuyau de fluide (6) peut être emmanché.

7. Disposition spatiale (1) selon la revendication 1, **caractérisée en ce que** ledit au moins un évidement latéral (7) sur le boîtier (2) est réalisé sous la forme d'un arc de cercle avec un centre dans l'axe de basculement (K).

8. Disposition spatiale (1) selon la revendication 1, **caractérisée en ce que** le boîtier (2) comporte en outre un ou plusieurs supports (15) pour une ou plusieurs pièces rapportées (10).

9. Disposition spatiale (1) selon la revendication 8, **caractérisée en ce que** la pièce rapportée (10) est un cylindre de fermeture qui est agencé en face de l'évidement avant du boîtier (2).

10. Disposition spatiale (1) selon la revendication 1, **caractérisée en ce que** sur au moins un côté du boîtier (2) est agencé au moins un élément à ressort (16) qui est en liaison opérationnelle avec au moins un tourillon (9) et est agencé coaxialement à l'axe de basculement (K).

11. Disposition spatiale (1) selon la revendication 10, **caractérisée en ce que** sur le boîtier est agencé au moins un élément d'amortissement (17) qui est en liaison opérationnelle avec au moins un tourillon (9) et est agencé coaxialement ou parallèlement à l'axe de basculement (K).

12. Disposition spatiale (1) selon la revendication 1, **caractérisée en ce que** le boîtier (2) comporte au moins un élément de retenue (14) pour rentenir la disposition spatiale (1) sur la carrosserie.

13. Disposition spatiale (1) selon la revendication 1, **caractérisée en ce que** le boîtier (2) comporte au moins un capteur de signal acoustique et/ou optique.

14. Disposition spatiale (1) selon la revendication 1, **caractérisée en ce que** le boîtier (2) comporte au moins un élément lumineux pour éclairer l'insert (3).
